# EUROPEAN PATENT APPLICATION

(11) **EP 4 749 498 A1**
(43) Date of publication of application: **27.05.2026**
(21) Application number: 24215338.5
(22) Date of filing: 26.11.2024
(51) Int. Cl.: G06F 21/62, G06F 9/54, G06F 13/00, G06F 15/167

(54) **PROVIDING LOW-LATENCY COMMUNICATION BETWEEN SOFTWARE COMPONENTS OF A CONTROL SYSTEM**

(71) Applicant: ABB SCHWEIZ AG, 5400 Baden (CH)
(72) Inventor: KOZHAYA, David, 8953 Dietikon (CH); GOETTEL, Christian, 5442 Fislisbach (CH)
(74) Representative: Maiwald GmbH

(57) **Abstract**

A method (100) for providing communication between multiple software components (2a-2d) in an industrial control system (1) using a common data store (3) holding a set of to-be-communicated variables (4), wherein
• the common data store (3) is divided into multiple sub-sections (3a-3c),
• each to-be-communicated variable (4) resides in at least one such sub-section (3a-3c), and
• each software component (2a-2d) is configured to write values of variables (4) as outputs to the common data store (3) and read values of variables (4) from the common data store (3) as inputs,
the method (100) comprising the steps of, in response to a request of one of the software components (2a-2d) to write a value of a variable (4) to the common data store (3), or to read a value of a variable (4) from the common data store (3):
• determining (110), based on an identifier of the to-be-written or to-be-read variable (4), the sub-section (3a-3c) of the common data store (3) in which the to-be-written or to-be-read variable (4) resides;
• determining (120), based on an address assignment (3a#-3c#) for this sub-section (3a-3c), a memory location (4a) of the to-be-written or to-be-read variable (4); and
• modifying (140a) the to-be-written variable (4) at this memory location (4a), respectively reading (140b) the to-be-read variable (4) from this memory location (4a).

## Description

### FIELD OF THE INVENTION

The invention relates to facilitating the communication between different software components of different security levels of an industrial control system, in particular in the use case of protection and control, P&C, in an electrical substation.

### BACKGROUND

Electrical substations are equipped with protection and control, P&C, functionality that is designed to disconnect the electrical substation from an upstream feeder of electrical energy, or from a downstream consumer of electrical energy, in case of an abnormal operating situation. The goal is to isolate any problems before they spread further through the electricity distribution grid.

In the past, P&C functions running on substation relays followed a monolithic design that would only allow for a limited degree of configuration with respect to deployment scenarios and customer demands. However, the trend today is shifting towards virtual relays and on-demand P&C, where customers can choose what P&C products they need and the hardware resources to run them. For this reason, there is a fundamental need to step away from monolithic designs and move to architectures that support scale down and scale out scenarios. Therefore, P&C functions are now implemented in a modular manner with multiple software components that communicate with each other. At the same time, there is a desire to protect the intellectual property of the P&C algorithms, i.e., not to disclose them to the user. To this end, some software components are moved to trusted execution environments, TEE, where they run in isolation from other software components and from a host computing system. That is, the user can enjoy the benefit of the running software components, but they are prevented from looking inside them. Having some software components running in TEEs inherently limits communication between software components.

### OBJECTIVE OF THE INVENTION

It is therefore an objective of the invention to facilitate low-latency communication between software components of an industrial control system even in a situation where one or more such components are running under the protection of a TEE.

This objective is achieved by a method according to the main claim. Further advantageous embodiments are detailed in the dependent claims.

### DISCLOSURE OF THE INVENTION

The invention provides a method for providing communication between multiple software components in an industrial control system. This method employs a common data store holding a set of to-be-communicated variables. Herein, the term "common data store" is not to be construed limiting in the sense that all the to-be-communicated variables have to reside in one and the same place. Rather, this term only implies that the common data store as a whole may be an abstracted entity that can be called upon to read or write the value of a to-be-communicated variable. That is, the to-be-communicated variables may be distributed in one or more memories in any suitable manner, but the communicating software components do not need to know about this. Rather, they can just issue requests of the kind "write this value to variable X" or "read the value of variable Y".

The common data store is divided into multiple sub-sections. This is a logical division that may, but is not required to, coincide with a physical division. Each to-be-communicated variable resides in only one such sub-section. Each software component is configured to write values of variables as outputs to the common data store and read values of variables from the common data store as inputs. A value of a valuable may be communicated from a first software component to one or more further software components by means of writing, by the first software component, this value to the common data store, and reading, by the one or more further software components, this value from the common data store. In particular, in the use case of P&C functions, many values are written by only a few software components, or even by only one software component, whereas they are read by many further software components. That is, a one-to-many distribution of values is very frequent in this use case.

The present method starts from the situation where there is a request of one of the software components to write a value of a variable to the common data store, or to read a value of a variable from the common data store. In response to such a request, based on an identifier of the to-be-written or to-be-read variable, the sub-section of the common data store in which the to-be-written or to-be-read variable resides is determined.

Once this sub-section is known, based on an address assignment for this sub-section, a memory location of the to-be-written or to-be-read variable is determined. The address assignment can be anything that, given an identifier of the to-be-written or to-be-read variable, yields the memory location of this variable. For example, the memory location may be looked up in a table, and/or it may be computed based at least in part on the identifier. Each sub-section may have its own way of assigning addresses, which means that different sub-sections may assign the addresses in different manners.

Once the memory location is known, the to-be-written variable is modified at this memory location, respectively the to-be-read variable is read from this memory location.

Working with a common data store that is divided into multiple sub-sections may, on the face of it, appear as an unnecessary complication that counteracts the goal of providing low-latency communication between software components. But this is not true. Rather, the advantageous effect of this division in terms of latency is two-fold:
First, dependencies between variables, and contentions when accessing multiple variables, are reduced. The multiple software components are all executing at the same time. This means that, at any given time, many variables are being read from the common data store and written to the common data store. The division of the common data store into multiple sub-sections greatly reduces the probability of situations where one software application has to wait for another software application due to a contention situation regarding the required access to variables. This in turn reduces the latency that is to be expected.

Second, first determining the sub-section where a variable resides and then determining the memory address of this variable based on the address assignment for this sub-section may be faster than determining the memory address from one single address assignment for the whole common data store. For example, if a table is used to look up the memory address based on an identifier of the variable, then the identifier has to be compared to the identifiers in all rows of the table until a matching identifier is found, and the memory address in this row of the table may be used. The work required for this linearly scales with the number of to-be-communicated variables. Much of this work can be saved by jumping right into a much smaller table for the sub-section where the variable is known to reside.

In a particularly advantageous embodiment, the multiple software components are of different security levels. This may create a need for isolating the software components from each other by running them in different execution environments, such as virtual machines or enclaves. This isolation in turn limits the possibilities for direct communication between the software components, so that a need to use the common data store as a communication medium arises.

Thus, in particular, the multiple sub-sections may reside in one or more physical locations of potentially varying security levels. This means that the physical locations may be isolated from one another by means of a security protection. For example, the physical locations may belong to different execution environments, and access to memory that belongs to one execution environment may be disallowed for all other execution environments.

In a further particularly advantageous embodiment, each to-be-communicated variable resides in only one sub-section of the common data store. In this manner, whenever this variable is to be updated, only one place in the common data store will be affected.

Which concrete division of all the to-be-communicated variables into multiple sub-sections is best depends on the concrete use case. Choosing a good division is particularly beneficial for avoiding said contention situations. In one particularly advantageous embodiment, at least one sub-section comprises only to-be-communicated variables that are, in the intended operation of the control system, to be written by one and the same software component. That is, the to-be-communicated variables may be grouped into sub-sections by the software component that is to write them: the first group may contain all variables to be written by software component A and only by software component A, the second group may contain all variables to be written by software component B and only by software component B, and so on. This means that, for example, whenever one software component is about to write values of one or more variables to the common data store, it may lock only the sub-section with the variables that are to be written by this software component. All other variables are unaffected by the intended writing operation and may continue to be used by other software components unimpeded.

Segregating the to-be-communicated variables, in particular by the software component that is to write them, has the additional effect that possible communication paths between different software components may be limited. That is, communication via the common data store may be configured in a manner that it can only performed along those relationships between software components that are planned for. This means that it is made more difficult to intentionally corrupt the behavior of a software application by feeding it with communication from a completely unexpected place.

In a further particularly advantageous embodiment, the sub-section of the common data store in which the to-be-written or to-be-read variable resides is determined from a table that assigns, to each identifier of a to-be-communicated variable, a sub-section of the common data store. For example, this table may operate on parts of identifiers, so that the determining of the sub-section is still a lot faster than looking up the complete identifier in a table. In a simple example, the first digit of a numeric identifier of a variable may be used to determine the sub-section of the common data store in which the variable resides.

In a further particularly advantageous embodiment, the address assignment for at least one sub-section is based at least in part on a hash value or other compressed digest of an identifier of the to-be-written or to-be-read variable. In particular, such hash value or other compressed digest may be used immediately, or after a small further computation (such as adding an offset), as the sought memory address of the to-be-written or to-be-read variable. That is, the sub-section may work as some sort of key-value hashmap where the hash of the key (here: the identifier) is used to determine the location of the value of the variable in memory. The benefit of this is that computing a hash value or other compressed digest, and thus the determining of the sought memory location, always takes the same amount of time, no matter how many variables are in the respective sub-section. The hash value or other compressed digest does not need to be cryptographically secure in the sense that it is made difficult to intentionally produce, given one hash, another input that is mapped to the same hash. The probability that two or more variables will be assigned the same hash or other compressed digest, and thus the same memory location, is still negligible.

In a further particularly advantageous embodiment, before modifying the to-be-written variable, respectively before reading the to-be-read variable: obtaining a write lock, respectively a read lock, is obtained for the to-be-written or to-be-read variable, and/or for the memory location where this variable resides. After modifying the to-be-written variable, respectively after reading the to-be-read variable, the write lock, respectively the read lock, is released. In this manner, it is avoided that one software component reads the value of a variable while another software component is in the process of modifying it. Such a situation could lead to a wrong value of the variable being used by the reading software component. In particular, a write lock may be exclusive, i.e., for a given resource (e.g., variable or memory location), there may be only one write lock, and while this write lock is in place, no other software component may obtain a read lock. Read locks, on the other hand, may be shared in the sense that there may be many of them concurrently on one and the same resource. The presence of a read lock only precludes the obtaining of a write lock.

Besides locking, other concurrency mechanisms for concurrent access to variables may be used, e.g., multi-versioning or any other kind of lock-free concurrency.

In particular, the write lock, respectively the read lock, may be obtained for the sub-section of the common data store where the to-be-written variable or the to-be-read variable resides. In many applications, this is a good balance between locking the whole common data store on the one hand, and an extremely granular administration of locks for every individual to-be-communicated variable on the other hand. As discussed before, an appropriate splitting of the to-be-communicated variables into sub-sections minimizes the effects that the locking has on the operation of other software components.

In a further particularly advantageous embodiment, in a case where multiple variables are to be written and/or read in one single computation transaction, all required write locks and/or read locks are obtained before starting the computation and released again after the computation has finished. In this manner, it may be ensured that the transaction as a whole goes ahead and does not get stuck somewhere in the middle because a required resource (i.e., variable) is not available.

Real-time transactional support of this kind is particularly important for protection and control, P&C, functionality in electrical substations. This implies determinism, extremely small latencies (few microseconds), and atomic execution of a batch of operations in a single transaction. Using a conventional database as the communication medium between software components does not require any advance knowledge about the nature of the to-be-communicated variables because a database is a universal tool. However, the price to be paid for this is that a database has a relatively slow performance. In particular, it is very difficult to achieve transactional support in real-time because a lot of uncertainties due to aborts and retries are involved. This makes real-time latencies as well as determinism immensely difficult to achieve. By contrast, the presently proposed method utilizes a priori knowledge about the involved software components and their behavior, thereby improving the performance in this particular application.

In a further particularly advantageous embodiment, the multiple write locks and/or read locks are obtained in an order according to an ordered hierarchy of the affected variables and/or sub-sections. The multiple write locks and/or read locks are released again in the reverse of the order in which they were obtained. In this manner, where two or more software components compete for the locking of a particular set of resources, there is always a winner. This means that deadlock situations, where each software component is waiting for another one to release its lock on some resource, are avoided. For example, the sub-sections may be in a linear hierarchy of 1, 2, 3, ..., and if there are requests for sub-sections 4, 6 and 2, then locks will be obtained first for sub-section 2, then for sub-section 4, and then for sub-section 6. In particular, the locking action may be a blocking call, meaning that a sub-section with a higher number cannot be locked until all locks for sub-sections with lower numbers have been obtained.

With a conventional database, each write would be a random write, so large parts of the database would have to be locked at any one time. The percentage of all to-be-communicated variables that is locked at any one time is greatly reduced by the presently proposed method. For example, if the to-be-communicated variables are grouped into sub-sections according to the entity that is to write them, when it is the turn of this entity to write, only this particular sub-section needs to be locked.

In a further particularly advantageous embodiment, different sub-sections of the common data store are located in memory areas with different levels of security protection. In this manner, sensitive data may be protected as desired, but the software components reading and writing do not need to worry about this. This is all taken care of by the abstraction layer introduced by the present method. For example, there may be a "secure data store" with only those sub-sections that are to be exchanged between particular software components deemed to be secure, and there may be a "generic data store" with those sub-sections that are to be exchanged between "secure" software components and other software components. Alternatively or in combination to this, to-be-communicated variables may be labelled "public" for free exchange between software components, or "private" for distribution only within a restricted subset of the software components, by whatever means.

Typically, the software components are executed on a host computing system. For example, for each software component, a container, a virtual machine, or another execution environment may be set up under the control of an operating system running on the host computing system. In one example, at least one sub-section of the common data store is located in normal random access memory, RAM, of a host computing system on which the control system runs. At the same time, at least one sub-section of the common data store is located in a trusted execution environment, TEE, in which at least a part of one software component of the control system runs in isolation from the host computing system and an operating system running on this host computing system. In this manner, unauthorized access to sensitive variables may be prevented. Sensitive variables that are owned by the software component running in the TEE may be shared with other software components, but access may limited, by the abstraction layer introduced with the present method, to exactly those other software components that are actually planned and desired to have access.

In a further particularly advantageous embodiment, the division of the common data store into sub-sections is determined upon start-up of the control system based on configuration information of the control system. In this manner, the setup of the common data store may be adapted to the needs of the concrete configuration of the control system. For example, having a modular control system means that a particular module may be present in one particular control system, but absent in another.

For example, in the use case of P&C functions for electrical substations, a customer may request a specific list of P&C functionalities to manage their assets (e.g., substations) from a range of products offered by one or more vendors. A configuration file may then be generated and include, in particular, the following:
- The various functionalities (products) that the customer requested, configured to run in independent software components. A software component must entail at least one functionality; and
- For each software component the set of data (signals) used by that function, i.e., the set of inputs as well as outputs of that software block. Hence, the entire data of the system would include all signals acting as input to all components and all signals going out of all components.

From this configuration file, the data that is exchanged among the different components may be extracted. This data makes up the to-be-communicated variables that will be saved in the common data store, the communication medium employed in the context of the present method.

As the first step of the extraction mechanism, the configuration file may be examined, and the read set and the write set for every software component may be extracted from it. For a specific component, the read set of this component is the set of all data (signals) that are input to all functionalities of this component, and the write set of this component is the set of all data (signals) that are output from all functionalities of this component. For instance, such an extraction can be realized by implementing proper parsing techniques of the configuration file.

Also, the signals in both the read set as well as the write set can be labeled to reflect how they are used. One such example of this labeling is to have signals assigned "Private" and "Public" tags, where a private data signal is exchanged among a pair of "secure" software components and a public data signal is shared between all other pairs of software components.

To leverage the reduced dependency between the various software components that implement different P&C functionalities, the data store(s) may be built on the fly based on the desired customer configuration. Precisely, the data store(s) may be built as a set of multiple hash maps, at most one for each software component in the configuration. However, this internal structure of a data store is not visible to the software components, but is rather abstracted by means of interfaces to give the illusion of a single data structure. The mapping between which data sits in which hash map of the signal store is determined based on the presently proposed method at commissioning or system start-up and remains static for a given executed configuration.

For each sub-section, a hashmap may then store data in the form of <key, value> where key is the name the data (signal) and value is the value of that specific signal. The set of keys that are stored in the hashmap may, for example, be computed by determining the overlap between the writeset of one software component and all read sets of other software components than this one.

In addition to the hashmap, a ring buffer may be used to stream signals of large data volume and continuous nature of change.

As discussed before, the to-be-communicated variables may be labelled with distribution tags indicating the software components among which they are supposed to be shared. This helps to group them optimally into sub-sections so as to reduce contention, and to prevent communication along paths that are not intended.

As discussed before, in a particularly advantageous embodiment, the control system may be chosen to implement at least one protection and control, P&C, function in a substation for the distribution of electrical energy. As explained above, this use case has particularly strict requirements regarding low latencies. In particular, if one substation experiences that there is a problem in an upstream feeder or in a downstream consumer, action is required within a few microseconds. If one does not take action in time and isolate from the problem, then one will be perceived as the problem, and consequently isolated from, by other substations. Also, the to-be-taken actions frequently comprise transactions that must complete from start to finish. For example, when re-routing power through another part of the substation, several switches may have to be opened and closed, in exactly the right order so that, e.g., a separator switch is not opened under full load and destroyed by the arc.

Thus, in a further particularly advantageous embodiment, the P&C function comprises disconnecting at least one electrical feeder to the substation, and/or at least one electrical output from the substation, in response to determining a deviation of a current, a voltage, a load, or a frequency of to-be-distributed electrical energy from a respective acceptable range.

In a further particularly advantageous embodiment, in response to the writing of at least one value of a variable to the common data store being completed, and/or to the reading of at least one value of a variable from the common data store being completed, the industrial control system causes a change in the physical behavior of an industrial plant or installation. In particular, this may happen by virtue of actuating an actor of the industrial control system that influences the physical behavior of the industrial plant or installation with an actuation signal emitted from one or more software components of the industrial control system. In this manner, the improved low-latency communication between software components of the industrial control system has the beneficial effect that the physical behavior of the industrial plant or installation is more appropriate given the operating situation of the industrial plant or installation. The reason is that the low-latency communication enables the industrial control system to react to any changes of this operating situation much quicker. This is particularly true in a case where at least one to-be-communicated variable is a measurement value that has been acquired using at least one sensor of the industrial plant or installation. In particular, the operating situation of the industrial plant or installation may be characterized by a plurality of such measurement values.

Because it is computer-implemented, the present method may be embodied in the form of a software. The invention therefore also relates to a computer program with machine-readable instructions that, when executed by one or more computers and/or compute instances, cause the one or more computers and/or compute instances to perform the method described above. Examples for compute instances include virtual machines, containers or serverless execution environments in a cloud. The invention also relates to a machine-readable data carrier and/or a download product with the computer program. A download product is a digital product with the computer program that may, e.g., be sold in an online shop for immediate fulfilment and download to one or more computers. The invention also relates to one or more compute instances with the computer program, and/or with the machine-readable data carrier and/or download product.

### DESCRIPTION OF THE FIGURES

In the following, the invention is illustrated using Figures without any intention to limit the scope of the invention. The Figures show:
Figure 1: Exemplary embodiment of the method 100 for providing communication between multiple software components in an industrial control system;
Figure 2: Exemplary implementation of a common data store 3 for sharing data between a plurality of software applications 2a-2d;
Figure 3: Exemplary housing of different sub-sections of the common data store in areas of memory with different protection levels.

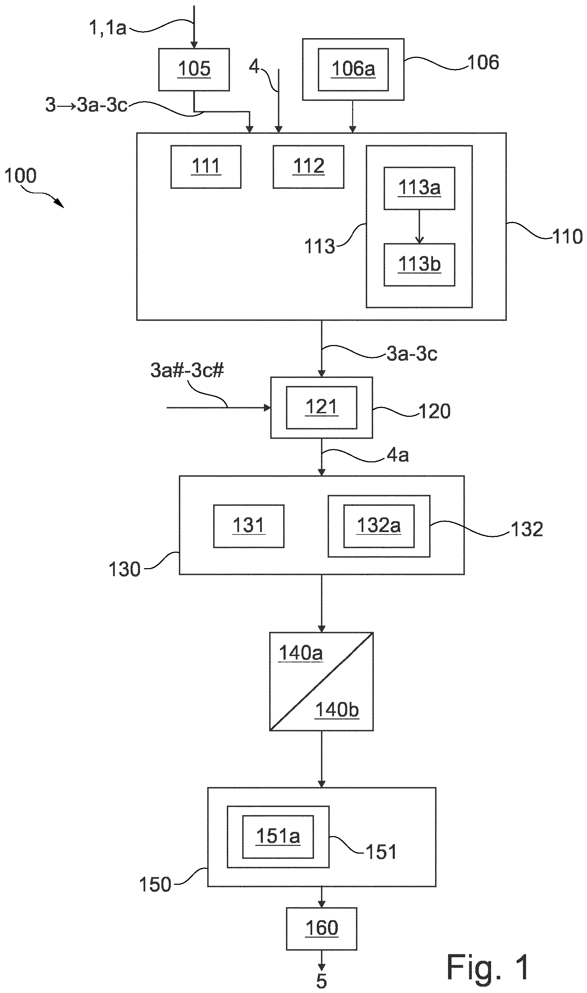

Figure 1 is a schematic flow chart of an embodiment of the method 100 providing communication between multiple software components 2a-2d in an industrial control system 1. The industrial control system 1 controls an industrial plant or installation 5, such as an electrical substation.

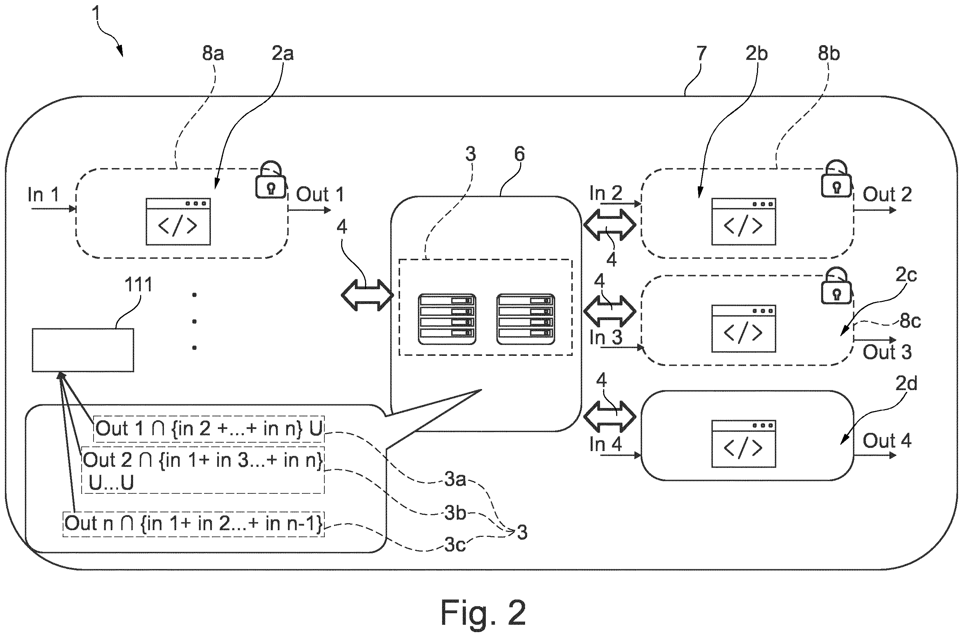

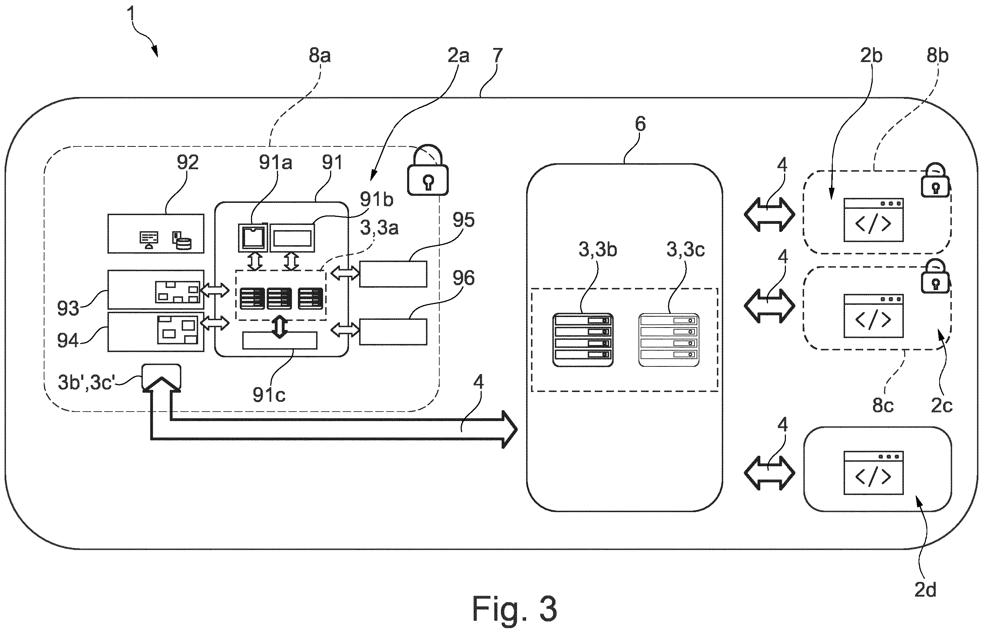

As it will be detailed further in Figures 2 and 3, the communication between the multiple software components 2a-2d utilizes a common data store 3 holding a set of to-be-communicated variables 4. The common data store 3 is divided into multiple sub-sections 3a-3c. Each to-be-communicated variable 4 resides in only one such sub-section 3a-3c.

According to block 105, the division of the common data store 3 into sub-sections 3a-3c may be determined upon start-up of the control system 1 based on configuration information 1a of the control system 1.

According to block 106, the control system 1 may be chosen to implement at least one protection and control, P&C, function in a substation for the distribution of electrical energy. In particular, according to block 106a, the P&C function may comprise disconnecting at least one electrical feeder to the substation, and/or at least one electrical output from the substation, in response to determining a deviation of a current, a voltage, a load, or a frequency of to-be-distributed electrical energy from a respective acceptable range.

The method starts from a situation where one of the software components 2a-2d requests to write a value of a variable 4 to the common data store 3, or to read a value of a variable 4 from the common data store 3. This situation occurs time and time again during operation of the industrial control system 1. This means that the method will be executed time and time again, and also concurrently with respect to many variables 4 at any given time.

In step 110, based on an identifier of the to-be-written or to-be-read variable 4, the sub-section 3a-3c of the common data store 3 in which the to-be-written or to-be-read variable 4 resides is determined.

According to block 111, at least one sub-section 3a-3c may comprise only to-be-communicated variables 4 that are, in the intended operation of the control system 1, to be written by one and the same software component 2a-2d. That is, the to-be-communicated variables 4 may be grouped by the software components 2a-2d that are to write them.

According to block 112, the sub-section 3a-3c of the common data store 3 in which the to-be-written or to-be-read variable 4 resides may be determined from a table that assigns, to each identifier of a to-be-communicated variable 4, a sub-section 3a-3c of the common data store 3.

According to block 113, different sub-sections 3a-3c of the common data store 3 may be located in memory areas with different levels of security protection. In particular,
- according to block 113a, at least one sub-section 3a-3c of the common data store 3 may be located in normal random access memory, RAM 6, of a host computing system 7 on which the control system 1 runs; and
- according to block 113b, at least one sub-section 3a-3c of the common data store may be located in a trusted execution environment, TEE 8a-8c, in which at least a part of one software component 2a-2d of the control system 1 runs in isolation from the host computing system and an operating system running on this host computing system 7.

This is detailed further in connection with Figure 3.

In step 120, based on an address assignment 3a#-3c# for this sub-section 3a-3c, a memory location 4a of the to-be-written or to-be-read variable 4 is determined.

According to block 121, the address assignment 3a#-3c# for at least one sub-section 3a-3c may be based at least in part on a hash value or other compressed digest of an identifier of the to-be-written or to-be-read variable 4.

In the example shown in Figure 1, in step 130, a write lock, respectively a read lock, is obtained for the to-be-written or to-be-read variable 4, and/or for the memory location 4a where this variable 4 resides. But as discussed before, contention regarding concurrent access to one and the same variable 4 may also be managed in a lock-free manner.

According to block 131, the write lock, respectively the read lock, may be obtained for the sub-section 3a-3c of the common data store 3 where the to-be-written variable or the to-be-read variable 4 resides.

According to block 132, in a case where multiple variables 4 are to be written and/or read in one single computation transaction, all required write locks and/or read locks may be obtained before starting the computation.

In particular, according to block 132a, the multiple write locks and/or read locks may be obtained in an order according to an ordered hierarchy of the affected variables 4 and/or sub-sections 3a-3c.

If the request is a write request, in step 140a, the to-be-written variable 4 is modified at the determined memory location 4a. Likewise, if the request is a read request, in step 140b, the to-be-read variable 4 is read from the determined memory location 4a.

In the example shown in Figure 1 where locks are used to manage contention, in step 150, obtained write locks or read locks are released.

According to block 151, in a case where multiple variables 4 are to be written and/or read in one single computation transaction, all required and previously obtained write locks and/or read locks may be released after the computation has finished.

In particular, according to block 151a, the multiple write locks and/or read locks may be released again 151a in the reverse of the order in which they were obtained.

In the example shown in Figure 1, in step 160, in response to the writing of at least one value of a variable 4 to the common data store 3 being completed, and/or to the reading of at least one value of a variable 4 from the common data store being completed, the industrial control system 1 causes a change in the physical behavior of an industrial plant or installation 5 controlled by the industrial control system 1.

Figure 2 illustrates on one example how a common data store 3 for sharing data between a plurality of software components 2a-2d may be implemented. In the example shown in Figure 2, the industrial control system 1 is implemented on a host computing system 7 and comprises four software components 2a-2d. Software component 2a is running in a VM-based protected execution environment, such as for example AMD SEV or Intel TDX, gets inputs labeled "In 1" and produces outputs labeled "Out 1". Software component 2b is running in another virtual-machine-based protected execution environment, gets inputs labeled "In 2" and produces outputs labeled "Out 2". Software component 2c is running in an application-based protected execution environment, such as for example Intel SGX, gets inputs labeled "In 3" and produces outputs labeled "Out 3". Software component 2d is a non-secure component that is running directly on the operating system of the host computing system 7 without any special protection.

All software components 2a-2d exchange variables 4 with a common data store 3 that resides in non-secure random access memory, RAM, of the host computing system 7. The common data store 3 has multiple sub-sections 3a-3c. According to block 111 of the method 100 described above, each sub-section 3a-3c is configured to receive outputs ("Out 1", "Out 2", ... , "Out n") of exactly one software component 2a-2d that is to be read by the respective other software components 2a-2d as input ("In 1", "In 2", ... , "In n"). In this manner, when one software component 2a-2d wants to write, only the respective sub-section 3a-3c of the common data store 3 needs to be locked.

Figure 3 illustrates on one example how the common data store 3 may be split between memory areas that are of different security protection.

In the example shown in Figure 3, the software components 2a-2d are the same as in Figure 2. Also, the software components 2a-2c run in the same trusted execution environments 8a- 8c as they do in Figure 2. But the software component 2a in the virtual-machine-based execution environment 8a is shown in more detail. This software component 2a comprises
- a virtual P&C platform 91;
- multiple containers 92 with non-real-time services;
- an P&C module 93 that is running with a 1 ms cycle;
- a custom module 94 that is running with a 10 ms cycle;
- a GOOSE application that handles events according to IEC 61850 in an electrical substation as industrial plant or installation 5; and
- a protocol/API frontend 96.

The virtual P&C platform 91 comprises other optional runtimes 91a and 91b that extend the platform, as well as a monitor 91c.

In the example shown in Figure 3, the common data store 3 is divided into three sub-sections 3a-3c, namely
- a first sub-section 3a with to-be-communicated variables 4 that are only to be read and written by secure software components (here: 2a-2c);
- a second sub-section 3b with to-be-communicated variables 4 that are only to be written by secure software components (here: 2a-2c), but free to be read by all software components 2a-2d; and
- a third sub-section 3c with to-be-communicated variables 4 that are free to be written by non-secure third-party software components, and free to be read by all software components 2a-2d.

The second sub-section 3b and the third sub-section 3c reside in normal RAM of the host computing platform 7. But the first sub-section 3a that is not to be even read by non-secure software components (here: 2d) resides in the virtual P&C platform 91 inside the virtual-machine-based trusted execution environment 8a. Inside this trusted execution environment 8a, there are mount points 3b' and 3c' by which the second sub-section 3b and the third sub-section 3c may be accessed without having to take care of that these sub-sections 3b and 3c reside in a completely different domain of memory.

### List of reference signs:

- 1: industrial control system
- 2a-2d: software components of industrial control systems
- 3: common data store for to-be-communicated variables 4
- 3a-3c: sub-sections of common data store 3
- 3a#-3c#: address assignments for sub-sections 3a-3c
- 3b', 3c': mount points for sub-sections 3b, 3c in execution environment 8a
- 4: to-be-communicated variables
- 4a: memory locations of to-be-communicated variables 4
- 5: industrial plant or installation controlled by industrial control system 1
- 6: random access memory, RAM, of host computing platform 7
- 7: host computing platform running industrial control system 1
- 8a-8c: secure (trusted) execution environments on host computing platform 7
- 91: virtual P&C platform in software component 2a
- 91a: first optional runtime in virtual P&C platform 91 in software component 2a
- 91b: second optional runtime in virtual P&C platform 91 in software component 2a
- 92: containers with non-real-time services in software component 2a
- 93: P&C module in software component 2a
- 94: custom module in software component 2a
- 95: GOOSE application in software component 2a
- 96: protocol/API frontend in software component 2a
- 100: method for providing communication between software components 2a-2d
- 105: determining sub-sections 3a-3c upon start-up of industrial control system 1
- 106: choosing industrial control system 1 that implements substation P&C function
- 106a: specific content of P&C function
- 110: determining sub-section 3a-3c where to-be-read/written variable 4 resides
- 111: grouping variables 4 by writing software component 2a-2c
- 112: determining sub-section 3a-3c from table
- 113: placing sub-sections 3a-3c in memory of different security protection levels
- 113a: placing a sub-section 3a-3c in normal RAM 6
- 113b: placing a sub-section 3a-3c in trusted execution environment 8a-8c
- 120: determining memory location 4a of to-be-read/written variable 4
- 121: using hash or other compressed product for address assignment 3a#-3c#
- 130: obtaining locks for variable 4/memory location 4a
- 131: obtaining lock for sub-section 3a-3c where variable 4 resides
- 132: obtaining all required locks before starting computation transaction
- 132a: obtaining locks according to ordered hierarchy
- 140a: modifying to-be-written variable 4
- 140b: reading to-be-read variable 4
- 150: releasing previously obtained locks
- 151: releasing locks after computation transaction has finished
- 151a: releasing locks in reverse of order in which they were obtained
- 160: causing physical action in industrial plant or installation 5

## Claims

1. A method (100) for providing communication between multiple software components (2a-2d) in an industrial control system (1) using a common data store (3) holding a set of to-be-communicated variables (4), wherein
• the common data store (3) is divided into multiple sub-sections (3a-3c),
• each to-be-communicated variable (4) resides in at least one such sub-section (3a-3c), and
• each software component (2a-2d) is configured to write values of variables (4) as outputs to the common data store (3) and read values of variables (4) from the common data store (3) as inputs,
the method (100) comprising the steps of, in response to a request of one of the software components (2a-2d) to write a value of a variable (4) to the common data store (3), or to read a value of a variable (4) from the common data store (3):
• determining (110), based on an identifier of the to-be-written or to-be-read variable (4), the sub-section (3a-3c) of the common data store (3) in which the to-be-written or to-be-read variable (4) resides;
• determining (120), based on an address assignment (3a#-3c#) for this sub-section (3a-3c), a memory location (4a) of the to-be-written or to-be-read variable (4); and
• modifying (140a) the to-be-written variable (4) at this memory location (4a), respectively reading (140b) the to-be-read variable (4) from this memory location (4a).

2. The method (100) of claim 1, wherein the multiple software components (2a-2d) are of different security levels.

3. The method (300) of any one of claims 1 to 2, wherein the multiple sub-sections (3a-3c) reside in one or more physical locations of potentially varying secure levels.

4. The method (100) of any one of claims 1 to 3, wherein each to-be-communicated variable (4) resides in only one such sub-section (3a-3c).

5. The method (100) of any one of claims 1 to 4, wherein at least one sub-section (3a-3c) comprises (111) only to-be-communicated variables (4) that are, in the intended operation of the control system (1), to be written by one and the same software component (2a-2d).

6. The method (100) of any one of claims 1 to 5, wherein the sub-section (3a-3c) of the common data store (3) in which the to-be-written or to-be-read variable (4) resides is determined (112) from a table that assigns, to each identifier of a to-be-communicated variable (4), a sub-section (3a-3c) of the common data store (3).

7. The method (100) of any one of claims 1 to 6, wherein the address assignment (3a#-3c#) for at least one sub-section (3a-3c) is based (121) at least in part on a hash value or other compressed digest of an identifier of the to-be-written or to-be-read variable (4).

8. The method (100) of any one of claims 1 to 7, further comprising:
• before modifying (140a) the to-be-written variable (4), respectively before reading (140b) the to-be-read variable (4): obtaining (130) a write lock, respectively a read lock, for the to-be-written or to-be-read variable (4), and/or for the memory location (4a) where this variable (4) resides; and
• after modifying (140a) the to-be-written variable (4), respectively after reading (140b) the to-be-read variable (4): releasing (150) the write lock, respectively the read lock.

9. The method (100) of claim 8, wherein the write lock, respectively the read lock, is obtained (131) for the sub-section (3a-3c) of the common data store (3) where the to-be-written variable or the to-be-read variable (4) resides.

10. The method (100) of any one of claims 8 to 9, wherein, in a case where multiple variables (4) are to be written and/or read in one single computation transaction, all required write locks and/or read locks are obtained (132) before starting the computation and released again (151) after the computation has finished.

11. The method (100) of claim 10, wherein
• the multiple write locks and/or read locks are obtained (132a) in an order according to an ordered hierarchy of the affected variables (4) and/or sub-sections (3a-3c); and
• the multiple write locks and/or read locks are released again (151a) in the reverse of the order in which they were obtained.

12. The method (100) of any one of claims 1 to 11, wherein different sub-sections (3a-3c) of the common data store (3) are located (113) in memory areas with different levels of security protection.

13. The method (100) of claim 12, wherein
• at least one sub-section (3a-3c) of the common data store (3) is located (113a) in normal random access memory, RAM (6), of a host computing system (7) on which the control system (1) runs; and
• at least one sub-section (3a-3c) of the common data store is located (113b) in a trusted execution environment, TEE (8a-8c), in which at least a part of one software component (2a-2d) of the control system (1) runs in isolation from the host computing system and an operating system running on this host computing system (7).

14. The method (100) of any one of claims 1 to 13, wherein the division of the common data store (3) into sub-sections (3a-3c) is determined (105) upon start-up of the control system (1) based on configuration information (1a) of the control system (1).

15. The method (100) of any one of claims 1 to 14, wherein to-be-communicated variables (4) are labelled with distribution tags indicating the software components (2a-2d) among which they are supposed to be shared.

16. The method (100) of any one of claims 1 to 15, wherein the control system (1) is chosen (106) to implement at least one protection and control, P&C, function in a substation for the distribution of electrical energy.

17. The method (100) of claim 16, wherein the P&C function comprises (106a) disconnecting at least one electrical feeder to the substation, and/or at least one electrical output from the substation, in response to determining a deviation of a current, a voltage, a load, or a frequency of to-be-distributed electrical energy from a respective acceptable range.

18. The method (100) of any one of claims 1 to 17, further comprising: in response to the writing of at least one value of a variable (4) to the common data store (3) being completed, and/or to the reading of at least one value of a variable (4) from the common data store being completed: causing (160), by the industrial control system (1), a change in the physical behavior of an industrial plant or installation (5) controlled by the industrial control system (1).

19. A computer program, comprising machine-readable instructions that, when executed by one or more computers and/or compute instances, cause the one or more computers and/or compute instances to perform the method (100) of any one of claims 1 to 18.

20. A non-transitory machine-readable data carrier and/or a download product with the computer program of claim 19.

21. One or more computers and/or compute instances with the computer program of claim 19, and/or with the non-transitory machine-readable data carrier and/or download product of claim 20.
